(19)

Europäisches
Patentamt
European
Patent Office
Office européen
des brevets

(11)  **EP 4 633 156 A1**

(12)  **EUROPEAN PATENT APPLICATION**
published in accordance with Art. 153(4) EPC

(43) Date of publication:
   **15.10.2025  Bulletin 2025/42**

(21) Application number: **24755991.7**

(22) Date of filing: **31.01.2024**

(51) International Patent Classification (IPC):
   **H04N 19/124** (2014.01)     **H04N 19/18** (2014.01)

(52) Cooperative Patent Classification (CPC):
   **H04N 19/107; H04N 19/12; H04N 19/124;**
   **H04N 19/13; H04N 19/91;** H04N 19/18

(86) International application number:
   **PCT/CN2024/074910**

(87) International publication number:
   **WO 2024/169617 (22.08.2024 Gazette 2024/34)**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(30) Priority:  **16.02.2023  CN 202310150970**

(71) Applicant: **Huawei Technologies Co., Ltd.**
   **Shenzhen, Guangdong 518129 (CN)**

(72) Inventors:
   • **ZHANG, Yixuan**
     **Shenzhen, Guangdong 518129 (CN)**
   • **LI, Yongkun**
     **Shenzhen, Guangdong 518129 (CN)**
   • **CHEN, Shaolin**
     **Shenzhen, Guangdong 518129 (CN)**
   • **YANG, Jianwei**
     **Shenzhen, Guangdong 518129 (CN)**

(74) Representative: **Maiwald GmbH**
   **Engineering**
   **Elisenhof**
   **Elisenstrasse 3**
   **80335 München (DE)**

(54)   **IMAGE PROCESSING METHOD AND ENCODER**

(57)   An image processing method and a codec are disclosed. The method includes: determining a quantized coefficient block obtained by quantizing a transform unit of an image; if quantized coefficients in the quantized coefficient block are all 0s, determining a quantized parameter threshold of the quantized coefficient block based on a base coefficient matrix for transforming the transform unit; and adjusting quantized coefficients at M locations in the quantized coefficient block based on the quantized parameter threshold. None of the adjusted quantized coefficients at the M locations is 0, and coefficients in a reconstructed residual coefficient block obtained by dequantizing and inversely transforming an adjusted quantized coefficient block are all 0s. According to the method, when the quantized coefficients are all 0s, a quantized coefficient block including a non-zero coefficient can be generated, and reconstructed residual coefficients obtained by dequantizing and inversely transforming the quantized coefficient block including the non-zero coefficient are all 0s.

S501: Determine a quantized coefficient block obtained by quantizing a transform unit of an image

S502: Determine whether quantized coefficients in the quantized coefficient block are all 0s

S503: Determine quantized coefficient thresholds at M locations in the quantized coefficient block and a quantized parameter threshold of the quantized coefficient block based on a base coefficient matrix

S504: Adjust quantized coefficients at the M locations based on the quantized coefficients at the M locations

S505: Determine a second quantized parameter based on the quantized parameter threshold and a first quantized parameter

FIG. 5

## Description

This application claims priority to Chinese Patent Application No. 202310150970.9, filed with the China National Intellectual Property Administration on February 16, 2023 and entitled "IMAGE PROCESSING METHOD AND CODEC", which is incorporated herein by reference in its entirety.

## TECHNICAL FIELD

This application relates to the field of computer technologies, and in particular, to an image processing method and a codec.

## BACKGROUND

A video source usually includes a huge amount of data. To reduce space for storing the video source and an amount of data for transmitting the video source, the video source needs to be encoded before being stored and transmitted. Encoding is a process of removing spatial, temporal, and statistical redundancy information from the video source to represent the video source with less data.

In a current video coding protocol, when a quantized coefficient block whose quantized coefficients are all 0s is generated through encoding, only a residual coefficient block whose residual coefficients are all 0s can be obtained through decoding. Alternatively, when a quantized coefficient block including a non-zero quantized coefficient is generated through encoding, only a residual coefficient block including a non-zero residual coefficient can be obtained through decoding.

## SUMMARY

This application provides an image processing method and a codec, so that a quantized coefficient block including a non-zero quantized coefficient can be generated through encoding, and in this case, a residual coefficient block whose residual coefficients are all 0s can be obtained through decoding.

According to a first aspect, this application provides an image processing method. The method may be applied to an encoder, and the method includes: determining a quantized coefficient block obtained by quantizing a transform unit of an image; if quantized coefficients in the quantized coefficient block are all 0s, determining quantized coefficient thresholds at M locations in the quantized coefficient block based on a base coefficient matrix, where the base coefficient matrix is used to transform the transform unit; and adjusting quantized coefficients at the M locations in the quantized coefficient block based on the quantized coefficient thresholds at the M locations, where none of the adjusted quantized coefficients at the M locations is 0, and residual coefficients obtained by dequantizing and inversely transforming an adjusted quantized coefficient block are all 0s.

In the foregoing solution, if the coefficients in the quantized coefficient block obtained by quantizing the transform unit are all 0s, the quantized coefficient threshold is determined based on the base coefficient matrix corresponding to the transform unit, and the coefficients at the M locations in the quantized coefficient block are adjusted to non-zero coefficients. In this way, the all-zero quantized coefficient block is converted into a quantized coefficient block including the non zeroes, and the residual coefficient blocks obtained by dequantizing and inversely transforming the adjusted quantized coefficient block can be all 0s.

In a possible implementation of the first aspect, determining the quantized coefficient thresholds at the M locations in the quantized coefficient block based on the base coefficient matrix includes: determining transform coefficient thresholds at the M locations based on the base coefficient matrix; and determining the quantized coefficient thresholds at the M locations based on a dequantization formula, a minimum quantized parameter, and the transform coefficient thresholds at the M locations, where the quantized coefficients at the M locations in the adjusted quantized coefficient block are not greater than the quantized coefficient thresholds at the M locations, dequantized transform coefficients of the quantized coefficients at the M locations in the adjusted quantized coefficient block are not greater than the transform coefficient thresholds at the M locations, and the minimum quantization coefficient is 1.

In the foregoing solution, the quantized coefficients at the M locations in the adjusted quantized coefficient block may be not greater than the quantized coefficient thresholds at the M locations, and the dequantized transform coefficients of the quantized coefficients at the M locations in the adjusted quantized coefficient block may be not greater than the transform coefficient thresholds at the M locations.

In a possible implementation of the first aspect, after adjusting the quantized coefficients at the M locations based on the quantized coefficient thresholds at the M locations, the method further includes: determining a quantized parameter threshold of the quantized coefficient block based on the dequantization formula, a minimum quantized coefficient, and the transform coefficient thresholds at the M locations; and determining a second quantized parameter based on the quantized parameter threshold and a first quantized parameter, where the first quantized parameter is used to quantize a transform coefficient block of the transform unit, the second quantized parameter is used to dequantize the adjusted quantized coefficient block, a value of the second quantized parameter does not exceed the quantized parameter threshold, and the minimum quantization coefficient is 0.

In the foregoing solution, the quantized parameter for dequantizing the quantized coefficient block is obtained based on the quantized parameter threshold determined based on the base coefficient matrix corresponding to the transform unit, so that the residual coefficient blocks obtained by dequantizing and inversely transforming the adjusted quantized coefficient block can be all 0s.

In a possible implementation of the first aspect, the transform coefficient thresholds at the M locations include values at the M locations in the base coefficient matrix.

In a possible implementation of the first aspect, the transform unit includes a first transform unit in a first column of coding units or a last transform unit in a last column of coding units in multi-row and multi-column coding units corresponding to the image.

In a possible implementation of the first aspect, when M is 1, adjusting the quantized coefficients at the M locations based on the quantized parameter threshold includes: adjusting a quantized coefficient in a first column of a first row in the quantized coefficient block based on quantized coefficient thresholds in the first column of the first row in the quantized coefficient block.

In a possible implementation of the first aspect, the method further includes: obtaining a bitstream of the image based on the adjusted quantized coefficient block and the second quantized parameter.

According to a second aspect, this application further provides an image processing method. The method may be applied to a decoder, and the method includes: obtaining a quantized coefficient block and a second quantized parameter based on a bitstream of an image, where the quantized coefficient block includes a non-zero quantized coefficient, dequantizing the quantized coefficient block based on the second quantized parameter, to obtain a reconstructed transform coefficient block; and inversely transforming the reconstructed transform coefficient block, to obtain a reconstructed residual coefficient block. The quantized coefficient block is obtained by an encoder according to the first aspect and the optional implementation of the first aspect, and residual coefficients in the reconstructed residual coefficient block are all 0s.

According to a third aspect, this application further provides an image processing apparatus. The apparatus includes a determining module and an adjustment module.

The determining module is configured to determine a quantized coefficient block obtained by quantizing a transform unit of an image.

The adjustment module is configured to: if quantized coefficients in the quantized coefficient block are all 0s, determine quantized coefficient thresholds at M locations in the quantized coefficient block based on a base coefficient matrix, and adjust quantized coefficients at the M locations based on the quantized coefficient thresholds at the M locations. The base coefficient matrix is used to transform the transform unit, none of the adjusted quantized coefficients at the M locations is 0, and residual coefficients in a reconstructed residual coefficient block obtained by dequantizing and inversely transforming an adjusted quantized coefficient block are all 0s.

In a possible implementation of the third aspect, the adjustment module is specifically configured to: determine transform coefficient thresholds at the M locations based on the base coefficient matrix; and determine the quantized coefficient thresholds at the M locations based on a dequantization formula, a minimum quantized parameter, and the transform coefficient thresholds at the M locations, where the quantized coefficients at the M locations in the adjusted quantized coefficient block are not greater than the quantized coefficient thresholds at the M locations, and dequantized transform coefficients of the quantized coefficients at the M locations in the adjusted quantized coefficient block are not greater than the transform coefficient thresholds at the M locations.

In a possible implementation of the third aspect, the adjustment module is further configured to: after adjusting the quantized coefficients at the M locations based on the quantized coefficient thresholds at the M locations, determine a quantized parameter threshold of the quantized coefficient block based on the dequantization formula, a minimum quantized coefficient, and the transform coefficient thresholds at the M locations; and determine a second quantized parameter based on the quantized parameter threshold and a first quantized parameter, where the first quantized parameter is used to quantize a transform coefficient block of the transform unit, the second quantized parameter is used to dequantize the adjusted quantized coefficient block, and a value of the second quantized parameter does not exceed the quantized parameter threshold. In a possible implementation of the third aspect, the transform coefficient thresholds at the M locations include values at the M locations in the base coefficient matrix.

In a possible implementation of the third aspect, the transform coefficient thresholds at the M locations include values at the M locations in the base coefficient matrix.

In a possible implementation of the third aspect, the transform unit includes a first transform unit in a first column of coding units or a last transform unit in a last column of coding units in multi-row and multi-column coding units corresponding to the image.

In a possible implementation of the third aspect, the encoder further includes a processing module, and the processing module is configured to obtain a bitstream of the image based on the adjusted quantized coefficient block and the second quantized parameter.

According to a fourth aspect, this application further provides an image processing apparatus. The apparatus includes a parsing module and a processing module.

The parsing module is configured to obtain a quantized coefficient block and a second quantized parameter based on a bitstream of an image, where the quantized coefficient block includes a non-zero quantized coefficient.

The processing module is configured to dequantize the quantized coefficient block based on the second quantized parameter, to obtain a reconstructed transform coefficient block; and the processing module is further configured to inversely transform the reconstructed transform coefficient block, to obtain a reconstructed residual coefficient block, where residual coefficients in the reconstructed residual coefficient block are all 0s.

According to a fifth aspect, this application further provides a computing device. The computing device includes a processor and a memory, and the processor is configured to execute a computer program stored in the memory, to implement any solution according to the first aspect and the possible implementation of the first aspect.

According to a sixth aspect, this application further provides a computer-readable storage medium, including instructions, and when the instructions are run on a computer, the computer is enabled to perform any solution according to the first aspect and the possible implementation of the first aspect.

According to a seventh aspect, this application further provides a computer program product, including program code, and when a computer runs the computer program product, the computer implements any solution according to the first aspect and the possible implementation of the first aspect.

Any apparatus, computer storage medium, or computer program product provided above is configured to perform the method provided above. Therefore, for beneficial effect that can be achieved by the apparatus, the computer storage medium, or the computer program product, refer to the beneficial effect of the corresponding solution in the corresponding method provided above. Details are not described herein again.

**BRIEF DESCRIPTION OF DRAWINGS**

FIG. 1 is a flowchart of encoding and decoding according to an embodiment of this application;
FIG. 2 is a diagram of a structure of dividing an image into a coding unit according to an embodiment of this application;
FIG. 3 is a diagram of a structure of dividing a coding unit into transform units according to an embodiment of this application;
FIG. 4 is a diagram of an application scenario according to an embodiment of this application;
FIG. 5 is a flowchart of an image processing method applied to an encoder according to an embodiment of this application;
FIG. 6 is a diagram of adjusting a quantized coefficient block according to an embodiment of this application;
FIG. 7 is a flowchart of inverse transform according to an embodiment of this application;
FIG. 8 is a flowchart of an image processing method applied to a decoder according to an embodiment of this application;
FIG. 9 is a diagram of a structure of an encoder according to an embodiment of this application;
FIG. 10 is a diagram of a structure of a decoder according to an embodiment of this application; and
FIG. 11 is a diagram of a structure of a computing device according to an embodiment of this application.

**DESCRIPTION OF EMBODIMENTS**

To make objectives, technical solutions, and advantages of embodiments of this application clearer, the following describes technical solutions in embodiments of this application with reference to accompanying drawings.

In descriptions of embodiments of this application, words such as "example", "for example", or "in an example" indicate giving an example, an illustration, or a description. Any embodiment or design scheme described as "example", "for example", or "in an example" in embodiments of this application should not be explained as being more preferred or having more advantages than another embodiment or design scheme. Specifically, use of the words such as "example", "for example", or "in an example" is intended to present related concepts in a specific manner.

In the descriptions of embodiments of this application, a term "and/or" describes only an association relationship between associated objects and indicates that three relationships may exist. For example, A and/or B may indicate the following three cases: Only A exists, only B exists, and both A and B exist. In addition, unless otherwise specified, a term "a plurality of" means two or more. For example, a plurality of systems mean two or more systems, and a plurality of screen terminals mean two or more screen terminals.

In addition, terms "first" and "second" are merely used for a description purpose, and shall not be understood as indicating or implying relative importance or implicitly including indicated technical features. Therefore, a feature limited by "first" or "second" may explicitly or implicitly include one or more features. Terms "include", "have", and their variants all mean "include but are not limited to", unless otherwise specifically emphasized in another manner.

In the computer field, a video usually includes a large amount of data, especially a high-definition video. Consequently, a large amount of storage space needs to be occupied for storing the video, and a large network bandwidth is consumed during video transmission. Therefore, when the video is stored or transmitted, an image in the video usually needs to be compressed (encoded) according to a specific video coding protocol, to reduce occupation of the storage space and consumption of the network bandwidth. Usually, a same video coding protocol is used to decompress (decode) an encoded bitstream, to obtain the video.

An advanced video coding (advanced video coding, AVC, or referred to as H.264) protocol and a high efficiency video coding (high efficiency video coding, HEVC, or referred to as H.265) protocol are two common video encoding and decoding protocols.

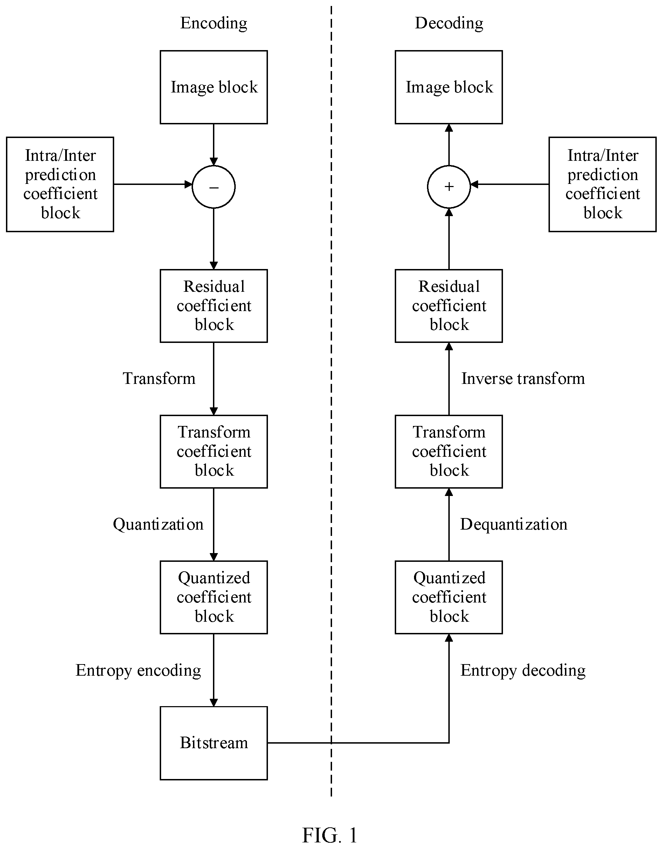

Both the H.264 protocol and the H.265 protocol perform encoding and decoding processing in a unit of a block. Encoding and decoding procedures of the H.264 protocol and the H.265 protocol may usually include steps shown in FIG. 1. The encoding and decoding procedure shown in FIG. 1 includes an encoding process and a decoding process. The encoding process is performed by an encoder, and may include steps such as intra prediction and/or inter prediction, residual calculation, transform, quantization, and entropy encoding shown in FIG. 1. The decoding process is performed by a decoder, and may include steps such as entropy decoding, dequantization, inverse transform, intra prediction and/or inter prediction shown in FIG. 1.

Before embodiments of this application are described, the following first explains several nouns in the H.264 protocol and the H.265 protocol.

A macro block (macro block, MB) is a unit for performing encoding and decoding in the H.264 protocol. The H.264 protocol may support MBs of seven sizes: $16 \times 16$, $16 \times 8$, $8 \times 16$, $8 \times 8$, $8 \times 4$, $4 \times 8$, and $4 \times 4$.

A coding unit (coding unit, CU) is a unit for performing encoding and decoding in the H.265 protocol. The H.265 protocol may support CUs of four sizes: $64 \times 64$, $32 \times 32$, $16 \times 16$, and $8 \times 8$. A CU with a size of $64 \times 64$ is usually referred to as a largest coding unit (largest coding unit, LCU).

A prediction unit (prediction unit, PU) is a basic unit for performing inter prediction or intra prediction in the H.264 protocol and the H.265 protocol. In the H.264 protocol, the PU is obtained by further dividing the MB. In the H.265 protocol, the PU is obtained by further dividing the CU. All PUs in an MB or a CU are predicted in a same manner, and are all intra prediction or inter prediction.

A transform unit (transform unit, TU) is a basic unit for performing transform and/or quantization in the H.264 protocol and the H.265 protocol. Similarly, in the H.264 protocol, the TU is obtained by further dividing the MB. In the H.265 protocol, the TU is obtained by further dividing the CU.

The following uses the H.265 protocol as an example to describe the encoding process and the decoding process shown in FIG. 1.

In the H.265 protocol, the encoder may encode an image in a video based on the following steps.

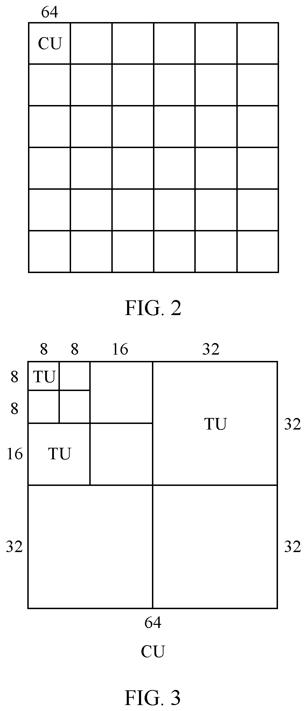

In the intra prediction and/or inter prediction step, the encoder may divide the image in the video into a plurality of coding units (coding units, CUs), and perform intra prediction and/or inter prediction on one or more CUs, to obtain an intra prediction coefficient block and/or an inter prediction coefficient block. In the H.265 protocol, as shown in FIG. 2, the image may be first partitioned into a $64 \times 64$ LCU as much as possible. When intra prediction and/or inter prediction are/is performed on the CU, the CU may be divided into prediction units PUs with small widths, and then an intra prediction coefficient block or an inter prediction coefficient block corresponding to each PU is obtained.

In the residual calculation step, the encoder may perform residual calculation on the CU based on the intra prediction coefficient block and/or the inter prediction coefficient block corresponding to the CU. After residual calculation is performed on the CU, a value in the CU changes from a pixel value or a chroma value to a corresponding residual coefficient. The CU on which residual calculation is performed may also be referred to as a residual coefficient block.

In the transform step, the encoder may transform, based on a transform process specified in the H.265 protocol, the CU on which residual calculation is performed. When a width of the CU on which residual calculation is performed is large, the CU may continue to be partitioned into small transform units TUs, for example, a $32 \times 32$ TU, a $16 \times 16$ TU, and an $8 \times 8$ TU shown in FIG. 3. After the TU is transformed, a value in the TU changes from the residual coefficient to a transform coefficient. The TU on which transform is performed may also be referred to as a transform coefficient block. The transform may include discrete sine transform (discrete sine transform, DST) and discrete cosine transform (discrete cosine transform, DCT). Specifically, a residual coefficient block R may be transformed by using a base coefficient matrix D corresponding to DCT defined in the H.265 protocol, and then a transform result is processed by using a scaling factor, to obtain a transform coefficient block. The H.265 protocol defines base coefficient matrices D of different sizes, to transform residual coefficient blocks R of different sizes. Transforming the residual coefficient block by using the base coefficient matrix is essentially a matrix multiplication operation. Therefore, in the H.265 protocol, two-dimensional transform is usually decomposed into one-dimensional transform performed twice. For example, for an N×N residual coefficient block R, in the first one-dimensional transform, columns $R_n$ ($1 \leq n \leq N$) in R are sequentially selected to perform an $D \times R_n$ operation to obtain $S_{1,n}$. After N $S_{1,n}$ are combined into a matrix form, first scaling is performed according to a first scaling factor, to obtain a result of the first transform $S_1$. In the second one-dimensional transform, rows $S_{1,n}^T$ in $S_1^T$ are sequentially selected to perform an $S_{1,n}^T \times D^T$ to obtain $S_{2,n}$. After N $S_{2,n}$ columns are combined into a matrix form, second scaling is performed according to a second scaling factor, to obtain a transform coefficient block $S_2$. The first scaling factor may be determined based on a scaling factor $S_{IT2}$ that is used after the second one-dimensional transform and that is defined in an inverse transform process in the H.265 protocol, and the second scaling factor may be determined based on a scaling factor $S_{IT1}$ that is used after the first one-dimensional transform and that is defined in the inverse transform process in the H.265 protocol.

In the quantization step, the encoder may quantize the TU on which transform is performed (transform coefficient block) based on a quantization process specified in the H.265 protocol, to obtain a quantized coefficient block. Specifically, the transform coefficient block is quantized according to a pre-obtained quantization formula, where the quantization formula is obtained by transforming a dequantization formula shown in Formula (1) specified in the H.265 protocol. As shown in Formula (1), the dequantization formula includes a quantized parameter QP corresponding to the TU. All TUs in a CU are quantized by using a same QP.

$$d[x][y] = Clip3\ (coeffMin,coeffMax,((TransCoeffLevel[xTbY][yTbY][cldx][x][y]m[x][y]^*\ levelScale[QP\%6] \ll[QP/6])+(1\ll (shift-1)))\gg shift) \qquad (1)$$

In Formula (1), d indicates a dequantized result (reconstructed transform coefficient block) of a quantized coefficient block *TransCoeffLevel* corresponding to a transform unit; *xTbY* and *yTbY* indicate a location of the transform unit in a coding unit, for example, a TU in an upper left corner shown in FIG. 3, and the location may be indicated by $xTbY=0$ and $yTbY = 0$; x indicates a quantity of rows, and y indicates a quantity of columns; *Clip3* indicates an inline function, *coeffMin* indicates a minimum value of a quantized coefficient; *coeffMax* indicates a maximum value of the quantized coefficient; *TransCoeffLeveel* indicates a quantized coefficient block; [*cldx*] indicates whether the coding unit in which the transform unit is located belongs to a luma block or a chroma block; m indicates a quantization matrix, and $m[x][y] = M[x][y]^*$ 16, where M is a configuration value of the quantization matrix, and $M[x][y] = 1$ when the quantization matrix is not used; *levelScale* indicates a scaling ratio of the quantized coefficient; $levelScale[QP\%6] = \{40,45,51,57,64,72\}$, $shift = S - 5 + B$, and $N = 2^S$, where N indicates a width of the TU, and B indicates a bit width; « and » indicate a bitwise operation; QP%6 indicates a remainder of QP divided by 6; *QP*/6 indicates a quotient of QP divided by 6; and $\lfloor QP/6 \rfloor$ indicates rounding down the quotient of QP divided by 6.

In the entropy encoding step, the encoder may perform entropy encoding on the quantized coefficient block by using a preset entropy encoding algorithm, so that a bitstream output by the encoder does not lose any information as much as possible. Quantization is a lossy compression manner. Entropy encoding is a lossless compression manner in which a mapping relationship between a quantized coefficient and original data is marked in a more compact manner according to an entropy principle. Common entropy encoding algorithms include Shannon encoding, Huffman encoding, arithmetic encoding, run-length encoding, and the like.

In the H.265 protocol, the decoder may decode, based on a decoding procedure specified in the protocol, the bitstream output by the encoder, to reconstruct the image in the original video. The decoding process of the decoder and the encoding process of the encoder are mutually inverse. Details are not described herein again. It should be noted that, after entropy encoding, the encoder needs to write the quantized parameter QP into the bitstream, so that the decoder can perform dequantization based on the quantized parameter QP.

In an existing encoding and decoding procedure, if quantized coefficients of a quantized coefficient block obtained by quantizing a coding block (CU or MB) are all 0s, it indicates that residual coefficients corresponding to the quantized coefficients are also all 0s. In this case, a QP value corresponding to the coding block does not need to be used during decoding, and the residual coefficient corresponding to the coding block may be directly set to 0, to obtain a reconstructed residual coefficient block. If a quantized coefficient block obtained by quantizing a coding block includes a non-zero quantized coefficient, a qP value of the coding block needs to be written into a bitstream, so that decoding can be performed based on the QP value, to reconstruct a residual coefficient block including non zeroes.

In view of this, embodiments of this application provide an image processing method, to resolve the foregoing problem.

In the image processing method, if it is determined that coefficients in a quantized coefficient block are all 0s, a quantized coefficient block including a non-zero coefficient is obtained by adjusting coefficients at one or more locations to non-zero target coefficients. In addition, a quantized parameter QP corresponding to the quantized coefficient block is adjusted, so that a residual coefficient block whose coefficients are all 0s can be obtained by dequantizing and inversely transforming the adjusted quantized coefficient block.

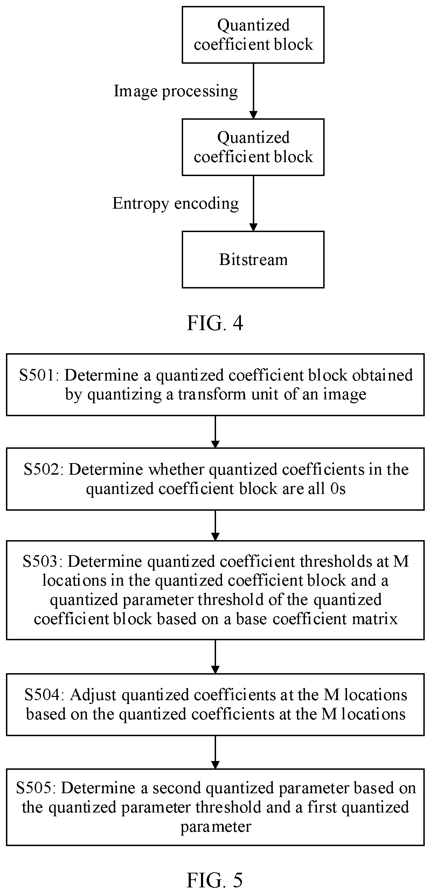

It should be noted that the image processing method may be applied to an encoder. As shown in FIG. 4, after performing quantization to obtain a quantized coefficient block and before performing entropy encoding on the quantized coefficient block, the encoder performs the foregoing adjustment operation. The image processing method may be further applied to a decoder. After obtaining the quantized coefficient block and before performing dequantization, the decoder performs the foregoing adjustment operation.

The following specifically describes the image processing method with reference to FIG. 5 by using an example in which the method is applied to an encoder.

FIG. 5 shows an image processing method according to an embodiment of this application. The method may include the following step S501 to step S505.

Step S501: Determine a quantized coefficient block obtained by quantizing a transform unit of an image.

In this embodiment, the encoder may perform residual calculation, transform, and quantization on the image in a video based on the steps in the encoding process shown in FIG. 1, to obtain the quantized coefficient block.

First, the image is partitioned into a plurality of CUs, and residual calculation is performed on the CUs. Specifically, inter prediction or intra prediction is performed on the CUs to obtain an inter prediction coefficient block or an intra prediction coefficient block corresponding to each CU, and residual calculation is performed on the CU based on the inter prediction coefficient block or the intra prediction coefficient block corresponding to the CU. A value in the CU on which residual calculation is performed changes to a residual coefficient, and the CU may be referred to as a residual coefficient block. For example, as shown in FIG. 2, the image may be partitioned into multi-row and multi-column LCUs, and inter prediction or intra prediction and residual calculation are performed on each LCU.

Then, the CU on which residual calculation is performed is partitioned into a plurality of TVs, and the TUs are sequentially transformed and quantized. A value in the TU on which transform is performed changes from the residual coefficient to a transform coefficient, and the value in the TU on which quantization is performed changes from the transform coefficient to a quantized coefficient. Therefore, the TU on which transform is performed may be referred to as a transform coefficient block, and the TU on which quantization is performed may be referred to as the quantized coefficient block.

When the TU is transformed, DCT transform may be performed on the TU based on a base coefficient matrix defined in the H.265 protocol. For a specific transform process, refer to the foregoing descriptions. Details are not described herein again.

When the TU is quantized, a quantization operation may be performed based on a quantization formula and a pre-specified quantized parameter QP. The quantization formula may be obtained in advance according to Formula (1).

Step S502: Determine whether quantized coefficients in the quantized coefficient block are all 0s.

In this embodiment, after obtaining the quantized coefficient block, the encoder may determine whether the coefficients in the quantized coefficient block are all 0s. If the quantized coefficient block includes a non-zero quantized coefficient, entropy encoding is performed on the quantized coefficient block based on the process shown in FIG. 1, to obtain a corresponding bitstream. If the quantized coefficients in the quantized coefficient block are all 0s, step S502 is performed.

Step S503: Determine quantized coefficient thresholds at M locations in the quantized coefficient block and a quantized parameter threshold of the quantized coefficient block based on the base coefficient matrix.

According to the objective of this embodiment, if the quantized coefficients in the quantized coefficient block are all 0s, quantized coefficients at the M locations in the quantized coefficient block need to be adjusted to non-zero values, and residual coefficients obtained by dequantizing and inversely transforming an adjusted quantized coefficient block are all 0s. Therefore, in this embodiment, the quantized coefficient block needs to be adjusted from two perspectives: the quantized coefficient and the quantized parameter.

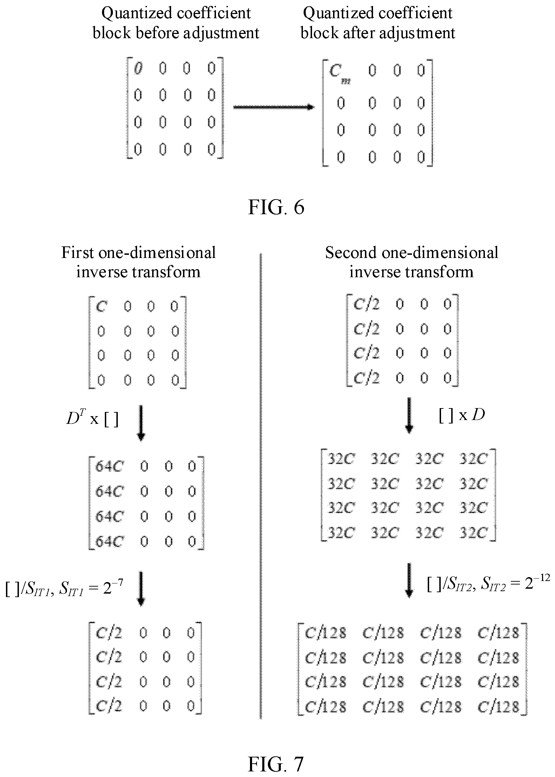

For example, a quantized coefficient in a first column of a first row in a $4\times4$ quantized coefficient block is adjusted. As shown in FIG. 6, it is assumed that the quantized coefficient in the first column of the first row in the quantized coefficient block is adjusted from 0 to $C_m$, to obtain an adjusted quantized coefficient block. In addition, it is assumed that after the adjusted quantized coefficient block is dequantized, a transform coefficient block shown in FIG. 7 is obtained. In FIG. 7, it is assumed that a transform coefficient in a first column of a first row in the transform coefficient block is C.

After one-dimensional inverse transform shown in FIG. 7 is performed on the transform coefficient block shown in FIG. 7 twice based on the inverse transform process defined in the H.265 protocol, a residual coefficient block shown in FIG. 7 is obtained. Each residual coefficient in the residual coefficient block is C/128.

Considering that the H.265 protocol needs to round off a floating-point number, to ensure that the coefficients in the residual coefficient block are all 0s, that is, C/128 is 0 after being rounded off, C needs to be less than 64. In other words, a value obtained by dequantizing the adjusted quantized coefficient in the adjusted quantized coefficient block needs to be less than 64.

In this embodiment, before adjusting the quantized coefficient block, the encoder may first determine the quantized parameter threshold based on the base coefficient matrix.

The encoder may determine the quantized parameter threshold *QP_max* according to Formula (2). Specifically, the encoder transforms Formula (2), and converts a bitwise operation in Formula (2), to obtain Formula (3).

$$(level \times QM_{DC} \times 16 \times (levelScale[QP\%6] \ll \lfloor QP/6 \rfloor) + offset) \gg shift < D_{i,j} \qquad (2)$$

$$levelScale[QP\%6] < \left(D_{i,j} * 2^{shift} - offset\right)/16/QM_{DC}/level/2^{\lfloor QP/6 \rfloor} \qquad (3)$$

In Formula (2) and Formula (3), *level* indicates the quantized coefficient, $QM_{DC}$ indicates a direct current value corresponding to a quantization matrix, and when the quantization matrix is not used, $QM_{DC}$ = 1 and *offset* = 1 « (*shift* - 1).

For Formula (3), a minimum value in the *levelScale* table is 40. Therefore, $D_{i,j} * 2^{shift}/16/QM_{DC}/$ $level/2^{\lfloor QP/6 \rfloor}$ needs to be greater than 40. In addition, to maximize QP, $QM_{DC}$ and *level* should take a minimum value of 1.

In the H.265 protocol, the value of the width N of the TU is 32, 16, 8, and 4. Therefore, there are four possibilities corresponding to QP_max. The following separately describes the four possibilities of QP_max by using an example in which B=8 and the quantized coefficient in the first column of the first row in the TU is adjusted, that is, $D_{i,j}$=64.

When N=32, and *shift* = 8, $D_{i,j} * 2^{shift}/16/QM_{DC}/level/2^{\lfloor QP/6 \rfloor}$ can be further simplified to $1024/2^{\lfloor QP/6 \rfloor}$, and $1024/2^{\lfloor QP/6 \rfloor}$ needs to be greater than 40. When $1024/2^{\lfloor QP/6 \rfloor}$ needs to be greater than 40, it can be learned through calculation that $\lfloor QP/6 \rfloor$ needs to be not greater than 4. Therefore, QP should range from 24 to 29. In addition, when $\lfloor QP/6 \rfloor$ takes a maximum value of 4, *levelScale*[*QP*%6] < 64. According to the *levelScale* table, the condition is met when *levelScale* takes 57, that is, *[QP%6]* = 3. The value of QP ranges from 24 to 29. Therefore, *QP_max,* the maximum value of *QP* is 27.

When N=16, and *shift* = 7, $D_{i,j} * 2^{shift}/16/QM_{DC}/level/2^{\lfloor QP/6 \rfloor}$ can be further simplified to $512/2^{\lfloor QP/6 \rfloor}$, and $512/2^{\lfloor QP/6 \rfloor}$ needs to be greater than 40. When $512/2^{\lfloor QP/6 \rfloor}$ needs to be greater than 40, it can be learned through calculation that $\lfloor QP/6 \rfloor$ needs to be not greater than 3. It can be learned that QP should range from 18 to 23. In addition, when $\lfloor QP/6 \rfloor$ takes a maximum value of 3, *levelScale*[*QP*%6] < 64. According to the *levelScale* table, the condition is met when *levelScale* takes 57, that is, *[QP%6]* = 3. The value of QP ranges from 18 to 23. Therefore, *QP_max,* the maximum value of *QP* is 21.

When N=8, and *shift* = 6, $D_{i,j} * 2^{shift}/16/QM_{DC}/level/2^{\lfloor QP/6 \rfloor}$ can be further simplified to $256/2^{\lfloor QP/6 \rfloor}$, and $256/2^{\lfloor QP/6 \rfloor}$ needs to be greater than 40. When $256/2^{\lfloor QP/6 \rfloor}$ needs to be greater than 40, it can be learned through calculation that $\lfloor QP/6 \rfloor$ needs to be not greater than 2. It can be learned that QP should range from 12 to 17. In addition, when $\lfloor QP/6 \rfloor$ takes a maximum value of 2, *levelScale*[*QP*%6] < 64. According to the *levelScale* table, the condition is met when *levelScale* takes 57, that is, *[QP%6]* = 3. The value of QP ranges from 12 to 17. Therefore, *QP_max,* the maximum value of *QP* is 15.

When N=4, and *shift* = 5, $D_{i,j} * 2^{shift}/16/QM_{DC}/level/2^{\lfloor QP/6 \rfloor}$ can be further simplified to $128/2^{\lfloor QP/6 \rfloor}$, and $128/2^{\lfloor QP/6 \rfloor}$ needs to be greater than 40. When $128/2^{\lfloor QP/6 \rfloor}$ needs to be greater than 40, it can be learned through calculation that $\lfloor QP/6 \rfloor$ needs to be not greater than 1. It can be learned that QP should range from 6 to 11. In addition, when $\lfloor QP/6 \rfloor$ takes a maximum value of 1, *levelScale*[*QP*%6] < 64. According to the *levelScale* table, the condition is met when *levelScale* takes 57, that is, *[QP%6]* = 3. The value of QP ranges from 6 to 11. Therefore, *QP_max*, the maximum value of *QP* is 9.

In this embodiment, after obtaining the quantized parameter threshold, the encoder may determine the quantized coefficients at the M locations in the adjusted quantized coefficient block based on the quantized parameter threshold.

First, the encoder may obtain the quantized coefficient thresholds at the M locations based on transform coefficient thresholds at the M locations and according to Formula (2). Specifically, the encoder transforms Formula (2), to obtain Formula (4).

$$level < \left(D_{i,j} * 2^{shift} - offset\right)/16/QM_{DC}/2^{\lfloor QP/6 \rfloor}/levelScale[QP\%6] \qquad (4)$$

For Formula (4), to maximize *level, $QM_{DC}$* should take a minimum value of 1, and QP should take a minimum value of 0. When QP=0, according to the *levelScale* Table, *levelScale* is 40, and $2^{\lfloor QP/6 \rfloor}$ is 1. Therefore, Formula (4) can be simplified to *level* < $D_{i,j}$ * $2^{shift}$/16/40.

Similarly, in the H.265 protocol, the value of the width N of the TU is 32, 16, 8, and 4. Therefore, there are four possibilities corresponding to *level*. The following separately describes the four possibilities of *level* by using an example in which B=8 and the quantized coefficient in the first column of the first row in the TU is adjusted, that is, $D_{i,j}$=64.

When N=32, and *shift* =8, *level* < 64 * $2^8$/16/40, that is, a maximum value of *level* is 25.6.

When N=16, and *shift* =7, *level* < 64 * $2^7$/16/40, that is, a maximum value of *level* is 12.8.

When N=8, and *shift* =6, *level* < 64 * $2^6$/16/40, that is, a maximum value of *level* is 6.4.

When N=4, and *shift* =5, *level* < 64 * $2^5$/16/40, that is, a maximum value of *level* is 3.2.

Step S504: Adjust the quantized coefficients at the M locations based on the quantized coefficients at the M locations. The adjusted quantized coefficients at the M locations in the quantized coefficient block are non-zero coefficients, and the adjusted coefficients at the M locations are less than the quantized coefficient thresholds at the M locations, so that the residual coefficients obtained by dequantizing and inversely transforming the adjusted quantized coefficient block are all 0s. The adjusted quantized coefficients at the M locations do not exceed the quantized coefficient thresholds at the locations.

In an embodiment, to achieve a highest encoding compression rate, the quantized coefficients are usually made as small as possible. Therefore, the quantized coefficients at the M locations in the quantized coefficient block may be adjusted from 0 to 1.

Step S505: Determine a second quantized parameter based on the quantized parameter threshold and a first quantized parameter. The first quantized parameter is a quantized parameter for quantizing a transform coefficient block of the transform unit, and the second quantized parameter is a quantized parameter for dequantizing the adjusted quantized coefficient block.

In this embodiment, if the first quantized parameter is greater than the quantized parameter threshold, it is determined that the second quantized parameter is the first quantized parameter. If the first quantized parameter is not greater than the quantized parameter threshold, it is determined that the second quantized parameter is the quantized parameter threshold.

For example, in a case of the four possible widths of the TU, with reference to the four possible quantized parameter thresholds, the second quantized parameter may be obtained according to the following formula: To be specific, QP(32)=min(27, QP), QP(16)=min(21, QP), QP(8)=min(15, QP), and Q(4)=min(9, QP).

In an embodiment, the encoder may perform step S502 on a first TU in a first column of LCUs or a last TU in a last column of LCUs in the multi-row and multi-column LCUs.

In an embodiment, when the image processing method shown in FIG. 5 is applied to the encoder, the method may further include: obtaining a bitstream of the image based on the adjusted quantized coefficient block and the second quantized parameter, and then storing the bitstream or sending the bitstream to the decoder.

In an embodiment, when the image processing method shown in FIG. 5 is applied to the decoder, the method may further include: parsing the bitstream of the image, and obtaining the quantized coefficient block before adjustment and the first quantized parameter from a parsing result of the bitstream.

Based on the method embodiment shown in FIG. 5, an embodiment of this application further provides an image processing method. The method may be applied to a decoder, configured to: after the encoder obtains the bitstream through the steps in the method embodiment shown in FIG. 5, perform image reconstruction based on the bitstream, to obtain a residual coefficient block whose residual coefficients are all 0s.

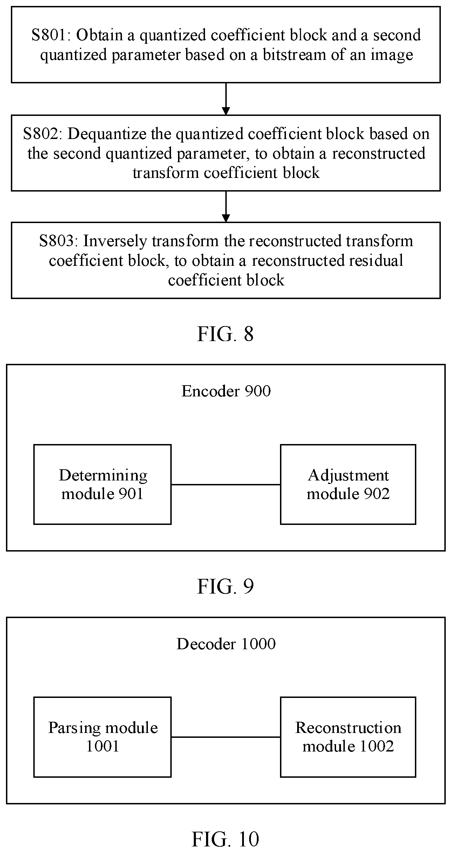

FIG. 8 is a flowchart of an image processing method according to an embodiment of this application. As shown in FIG. 8, the method may include the following step S801 to step S803.

Step S801: Obtain a quantized coefficient block and a second quantized parameter based on a bitstream of an image, where the quantized coefficient block includes a non-zero quantized coefficient.

In an embodiment, when the encoder and the decoder are located in a same computing device, the encoder may store the bitstream of the image in a memory of the computing device after performing entropy encoding on a transform unit TU in the image. In an embodiment, when the encoder and the decoder are located in different computing devices, a receiving device (computing device in which the decoder is located) may store the bitstream in a memory after receiving the bitstream sent by a sending device (computing device in which the encoder is located).

In this embodiment, the decoder may read the bitstream from the memory when a user needs to decode the bitstream for reconstruction. Then, entropy decoding is performed on the bitstream, to obtain the quantized coefficient block and the second quantized parameter. The quantized coefficient block is a quantized coefficient block obtained by performing coefficient adjustment by the encoder.

Step S802: Dequantize the quantized coefficient block based on the second quantized parameter, to obtain a reconstructed transform coefficient block.

In this embodiment, the H.265 protocol is used as an example. The decoder may dequantize the quantized coefficient block based on the second quantized parameter according to the dequantization formula in Formula (1), to obtain the reconstructed transform coefficient block.

Step S803: Inversely transform the reconstructed transform coefficient block, to obtain a reconstructed residual coefficient block, where residual coefficients in the reconstructed residual coefficient block are all 0s.

In this embodiment, the H.265 protocol is used as an example. The decoder may inversely transform, as shown in a process shown in FIG. 7, the reconstructed transform coefficient block based on a base coefficient matrix and a scaling factor that are specified in the protocol, to obtain the reconstructed residual coefficient block.

Based on the method embodiment shown in FIG. 5, an embodiment of this application further provides an encoder. The encoder is configured to perform the steps in the method shown in FIG. 5. The encoder is configured to perform the steps in the method shown in FIG. 5, to adjust a coefficient and a quantized parameter in a quantized coefficient block of a TU when the quantized coefficient block is all-zero, so that coefficients in a residual coefficient block obtained by reconstructing the adjusted quantized coefficient block by the decoder are all 0s.

FIG. 9 is a diagram of a structure of an encoder 900 according to an embodiment of this application. The encoder 900 includes a determining module 901 and an adjustment module 902.

The determining module 901 is configured to determine a quantized coefficient block obtained by quantizing a transform unit of an image.

The adjustment module 902 is configured to: if quantized coefficients in the quantized coefficient block are all 0s, determine a quantized parameter threshold of the quantized coefficient block based on a base coefficient matrix, and adjust quantized coefficients at M locations based on the quantized parameter threshold, where the base coefficient matrix is used to transform the transform unit, none of the adjusted quantized coefficients at the M locations is 0, and residual coefficients in a reconstructed residual coefficient block obtained by dequantizing and inversely transforming an adjusted quantized coefficient block are all 0s.

It should be noted that: when the encoder 900 provided in the embodiment shown in FIG. 9 performs an image processing method, division into the foregoing functional modules is merely used as an example for description. In actual application, the foregoing functions can be allocated to different functional modules and implemented based on a requirement, that is, an inner structure of a device is divided into different functional modules to implement all or some of the functions described above. In addition, the encoder 900 provided in the foregoing embodiment has a same concept as the image processing method embodiment shown in FIG. 5. For a specific implementation process of the encoder 900, refer to the method embodiment. Details are not described herein again.

Based on the method embodiment shown in FIG. 8, an embodiment of this application further provides an encoder. The decoder is configured to perform the steps in the method shown in FIG. 8, and perform image reconstruction on the bitstream obtained by the encoder through the steps in the method embodiment shown in FIG. 5, to obtain the residual coefficient block whose residual coefficients are all 0s.

FIG. 10 is a diagram of a structure of a decoder 1000 according to an embodiment of this application. The decoder 1000 includes a parsing module 1001 and a processing module 1002.

The parsing module 1001 is configured to obtain a quantized coefficient block and a second quantized parameter based on a bitstream of an image, where the quantized coefficient block includes a non-zero quantized coefficient.

The processing module 1002 is configured to dequantize the quantized coefficient block based on the second quantized parameter, to obtain a reconstructed transform coefficient block; and the processing module 1002 is further configured to inversely transform the reconstructed transform coefficient block, to obtain a reconstructed residual coefficient block, where residual coefficients in the reconstructed residual coefficient block are all 0s.

It should be noted that: when the decoder 1000 provided in the embodiment shown in FIG. 10 performs an image processing method, division into the foregoing functional modules is merely used as an example for description. In actual application, the foregoing functions can be allocated to different functional modules and implemented based on a requirement, that is, an inner structure of a device is divided into different functional modules to implement all or some of the functions described above. In addition, the decoder 1000 provided in the foregoing embodiment has a same concept as the image processing method embodiment shown in FIG. 8. For a specific implementation process of the decoder 1000, refer to the method embodiment. Details are not described herein again.

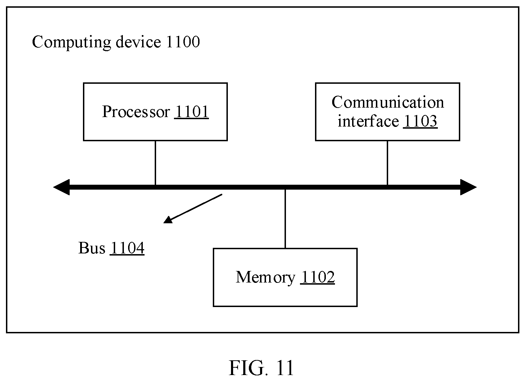

FIG. 11 is a diagram of a hardware structure of a computing device 1100 according to an embodiment of this application.

The computing device 1100 may include the foregoing encoder and/or decoder. Refer to FIG. 11. The computing device 1100 includes a processor 1101, a memory 1102, a communication interface 1103, and a bus 1104. The processor 1101, the memory 1102, and the communication interface 1103 are connected to each other through the bus 1104. The processor 1101, the memory 1102, and the communication interface 1103 may alternatively be connected to each other in a connection manner other than the bus 1104.

The memory 1102 may be various types of storage media, for example, a random access memory (random access memory, RAM), a read-only memory (read-only memory, ROM), and a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, a hard disk drive, or the like.

The processor 1101 may be a general-purpose processor, and the general-purpose processor may be a processor that performs a specific step and/or operation by reading and executing content stored in a memory (for example, the memory 1102). Optionally, the general-purpose processor may be a central processing unit (central processing unit, CPU). The processor 1101 may include at least one circuit, to perform all or some of the steps of the image processing method provided in the embodiment shown in FIG. 5 or FIG. 8.

The communication interface 1103 includes an interface configured to implement interconnection between components inside the computing device 1100, such as an input/output (input/output, I/O) interface, a physical interface, and a logical interface, and an interface configured to implement interconnection between the computing device 1100 and another device (for example, another computing device or user equipment). The physical interface may be an Ethernet interface, an optical fiber interface, an ATM interface, or the like.

The bus 1104 may be any type of communication bus, for example, a system bus, configured to implement interconnection among the processor 1101, the memory 1102, and the communication interface 1103.

The foregoing components may be separately disposed on chips that are independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components.

The computing device 1100 shown in FIG. 11 is merely an example. In an implementation process, the computing device 1100 may further include other components, which are not enumerated one by one in this specification.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for distinguishing for ease of description and are not used to limit the scope of embodiments of this application. It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

In the foregoing specific implementations, the objectives, technical solutions, and advantageous effect of this application are further described in detail. It should be understood that the foregoing descriptions are merely specific implementations of the present invention, but are not intended to limit the protection scope of this application. Any modification, equivalent replacement, improvement, or the like made based on the technical solutions of this application shall fall within the protection scope of this application.

**Claims**

1.  An image processing method, wherein the method comprises:

    determining a quantized coefficient block obtained by quantizing a transform unit of an image;
    if quantized coefficients in the quantized coefficient block are all 0s, determining quantized coefficient thresholds at M locations in the quantized coefficient block based on a base coefficient matrix, wherein the base coefficient matrix is used to transform the transform unit; and
    adjusting quantized coefficients at the M locations based on the quantized coefficient thresholds at the M locations, wherein none of the adjusted quantized coefficients at the M locations is 0, and residual coefficients in a reconstructed residual coefficient block obtained by dequantizing and inversely transforming an adjusted quantized coefficient block are all 0s.

2. The method according to claim 1, wherein determining the quantized coefficient thresholds at the M locations in the quantized coefficient block based on the base coefficient matrix comprises:

determining transform coefficient thresholds at the M locations based on the base coefficient matrix; and determining the quantized coefficient thresholds at the M locations based on a dequantization formula, a minimum quantized parameter, and the transform coefficient thresholds at the M locations, wherein the quantized coefficients at the M locations in the adjusted quantized coefficient block are not greater than the quantized coefficient thresholds at the M locations, and dequantized transform coefficients of the quantized coefficients at the M locations in the adjusted quantized coefficient block are not greater than the transform coefficient thresholds at the M locations.

3. The method according to claim 1 or 2, wherein after adjusting the quantized coefficients at the M locations based on the quantized coefficient thresholds at the M locations, the method further comprises:

determining a quantized parameter threshold of the quantized coefficient block based on the dequantization formula, a minimum quantized coefficient, and the transform coefficient thresholds at the M locations; and determining a second quantized parameter based on the quantized parameter threshold and a first quantized parameter, wherein the first quantized parameter is used to quantize a transform coefficient block of the transform unit, the second quantized parameter is used to dequantize the adjusted quantized coefficient block, and a value of the second quantized parameter does not exceed the quantized parameter threshold.

4. The method according to claim 3, wherein the transform coefficient thresholds at the M locations comprise values at the M locations in the base coefficient matrix.

5. The method according to any one of claims 1 to 4, wherein the transform unit comprises a first transform unit in a first column of coding units or a last transform unit in a last column of coding units in multi-row and multi-column coding units corresponding to the image.

6. The method according to any one of claims 1 to 6, wherein when M is 1, adjusting the quantized coefficients at the M locations based on the quantized coefficient thresholds at the M locations comprises:
adjusting a quantized coefficient in a first column of a first row in the quantized coefficient block based on a quantized coefficient threshold in the first column of the first row in the quantized coefficient block.

7. The method according to any one of claims 2 to 6, wherein the method further comprises:
obtaining a bitstream of the image based on the adjusted quantized coefficient block and the second quantized parameter.

8. An image processing method, wherein the method comprises:

obtaining a quantized coefficient block and a second quantized parameter based on a bitstream of an image, wherein the quantized coefficient block comprises a non-zero quantized coefficient, and the quantized coefficient block is determined based on the method according to any one of claims 1 to 7;
dequantizing the quantized coefficient block based on the second quantized parameter, to obtain a reconstructed transform coefficient block; and
inversely transforming the reconstructed transform coefficient block, to obtain a reconstructed residual coefficient block, wherein residual coefficients in the reconstructed residual coefficient block are all 0s.

9. An encoder, wherein the encoder comprises:

a determining module, configured to determine a quantized coefficient block obtained by quantizing a transform unit of an image; and
an adjustment module, configured to: if quantized coefficients in the quantized coefficient block are all 0s, determine quantized coefficient thresholds at M locations in the quantized coefficient block based on a base coefficient matrix, and adjust quantized coefficients at the M locations based on the quantized coefficient thresholds at the M locations, wherein the base coefficient matrix is used to transform the transform unit, none of the adjusted quantized coefficients at the M locations is 0, and residual coefficients in a reconstructed residual coefficient block obtained by dequantizing and inversely transforming an adjusted quantized coefficient block are all 0s.

10. The encoder according to claim 9, wherein the adjustment module is specifically configured to:

determine transform coefficient thresholds at the M locations based on the base coefficient matrix; and determine the quantized coefficient thresholds at the M locations based on a dequantization formula, a minimum quantized parameter, and the transform coefficient thresholds at the M locations, wherein the quantized coefficients at the M locations in the adjusted quantized coefficient block are not greater than the quantized coefficient thresholds at the M locations, and dequantized transform coefficients of the quantized coefficients at the M locations in the adjusted quantized coefficient block are not greater than the transform coefficient thresholds at the M locations.

11. The encoder according to claim 9 or 10, wherein the adjustment module is further configured to:

after adjusting the quantized coefficients at the M locations based on the quantized coefficient thresholds at the M locations, determine a quantized parameter threshold of the quantized coefficient block based on the dequantization formula, a minimum quantized coefficient, and the transform coefficient thresholds at the M locations; and determine a second quantized parameter based on the quantized parameter threshold and a first quantized parameter, wherein the first quantized parameter is used to quantize a transform coefficient block of the transform unit, the second quantized parameter is used to dequantize the adjusted quantized coefficient block, and a value of the second quantized parameter does not exceed the quantized parameter threshold.

12. The encoder according to claim 11, wherein the transform coefficient thresholds at the M locations comprise values at the M locations in the base coefficient matrix.

13. The encoder according to any one of claims 9 to 12, wherein the transform unit comprises a first transform unit in a first column of coding units or a last transform unit in a last column of coding units in multi-row and multi-column coding units corresponding to the image.

14. The encoder according to any one of claims 9 to 13, wherein when M is 1, the adjustment module is specifically configured to:
adjust a quantized coefficient in a first column of a first row in the quantized coefficient block based on a quantized coefficient threshold in the first column of the first row in the quantized coefficient block.

15. The method according to any one of claims 2 to 6, wherein the encoder further comprises a processing module, and the processing module is configured to obtain a bitstream of the image based on the adjusted quantized coefficient block and the second quantized parameter.

16. A decoder, wherein the decoder comprises:

a parsing module, configured to obtain a quantized coefficient block and a second quantized parameter based on a bitstream of an image, wherein the quantized coefficient block comprises a non-zero quantized coefficient; and a processing module, configured to dequantize the quantized coefficient block based on the second quantized parameter, to obtain a reconstructed transform coefficient block, wherein the processing module is further configured to inversely transform the reconstructed transform coefficient block, to obtain a reconstructed residual coefficient block, wherein residual coefficients in the reconstructed residual coefficient block are all 0s.

17. A computing device, wherein the computing device comprises a processor and a memory, and the processor is configured to execute a computer program stored in the memory, to implement the method according to any one of claims 1 to 7 or the method according to claim 8.

18. A computer-readable storage medium, comprising instructions, wherein when the instructions are run on a computer, the computer is enabled to implement the method according to any one of claims 1 to 7 or the method according to claim 8.

**19.** A computer program product, comprising program code, wherein when a computer runs the computer program product, the computer is enabled to implement the method according to any one of claims 1 to 7 or the method according to claim 8.

Encoding

Decoding

Image block

Image block

Intra/Inter
prediction
coefficient
block

−

+

Intra/Inter
prediction
coefficient
block

Residual
coefficient
block

Residual
coefficient
block

Transform

Inverse transform

Transform
coefficient
block

Transform
coefficient
block

Quantization

Dequantization

Quantized
coefficient
block

Quantized
coefficient
block

Entropy encoding

Entropy decoding

Bitstream

FIG. 1

64

| CU | | | | | |
|----|---|---|---|---|---|
| | | | | | |
| | | | | | |
| | | | | | |
| | | | | | |
| | | | | | |

FIG. 2

FIG. 3

```
┌─────────────────────┐
│     Quantized       │
│  coefficient block  │
└─────────────────────┘
          │
          │  Image processing
          ▼
┌─────────────────────┐
│     Quantized       │
│  coefficient block  │
└─────────────────────┘
          │
          │  Entropy encoding
          ▼
┌─────────────────────┐
│                     │
│      Bitstream      │
│                     │
└─────────────────────┘
```

FIG. 4

```
┌──────────────────────────────────────────────────────┐
│  S501: Determine a quantized coefficient block obtained │
│        by quantizing a transform unit of an image       │
└──────────────────────────────────────────────────────┘
                          │
                          ▼
┌──────────────────────────────────────────────────────┐
│  S502: Determine whether quantized coefficients in the │
│        quantized coefficient block are all 0s          │
└──────────────────────────────────────────────────────┘
                          │
                          ▼
┌──────────────────────────────────────────────────────┐
│  S503: Determine quantized coefficient thresholds at M │
│  locations in the quantized coefficient block and a    │
│  quantized parameter threshold of the quantized        │
│  coefficient block based on a base coefficient matrix  │
└──────────────────────────────────────────────────────┘
                          │
                          ▼
┌──────────────────────────────────────────────────────┐
│  S504: Adjust quantized coefficients at the M locations │
│  based on the quantized coefficients at the M locations │
└──────────────────────────────────────────────────────┘
                          │
                          ▼
┌──────────────────────────────────────────────────────┐
│  S505: Determine a second quantized parameter based on │
│  the quantized parameter threshold and a first quantized │
│                      parameter                         │
└──────────────────────────────────────────────────────┘
```

FIG. 5

Quantized coefficient
block before adjustment

Quantized coefficient
block after adjustment

$$\begin{bmatrix} 0 & 0 & 0 & 0 \\ 0 & 0 & 0 & 0 \\ 0 & 0 & 0 & 0 \\ 0 & 0 & 0 & 0 \end{bmatrix} \longrightarrow \begin{bmatrix} C_m & 0 & 0 & 0 \\ 0 & 0 & 0 & 0 \\ 0 & 0 & 0 & 0 \\ 0 & 0 & 0 & 0 \end{bmatrix}$$

FIG. 6

First one-dimensional
inverse transform

Second one-dimensional
inverse transform

$$\begin{bmatrix} C & 0 & 0 & 0 \\ 0 & 0 & 0 & 0 \\ 0 & 0 & 0 & 0 \\ 0 & 0 & 0 & 0 \end{bmatrix}$$

$$\begin{bmatrix} C/2 & 0 & 0 & 0 \\ C/2 & 0 & 0 & 0 \\ C/2 & 0 & 0 & 0 \\ C/2 & 0 & 0 & 0 \end{bmatrix}$$

$D^T \times [\ ]$ ↓

↓ $[\ ] \times D$

$$\begin{bmatrix} 64C & 0 & 0 & 0 \\ 64C & 0 & 0 & 0 \\ 64C & 0 & 0 & 0 \\ 64C & 0 & 0 & 0 \end{bmatrix}$$

$$\begin{bmatrix} 32C & 32C & 32C & 32C \\ 32C & 32C & 32C & 32C \\ 32C & 32C & 32C & 32C \\ 32C & 32C & 32C & 32C \end{bmatrix}$$

$[\ ]/S_{IT1},\ S_{IT1} = 2^{-7}$ ↓

↓ $[\ ]/S_{IT2},\ S_{IT2} = 2^{-12}$

$$\begin{bmatrix} C/2 & 0 & 0 & 0 \\ C/2 & 0 & 0 & 0 \\ C/2 & 0 & 0 & 0 \\ C/2 & 0 & 0 & 0 \end{bmatrix}$$

$$\begin{bmatrix} C/128 & C/128 & C/128 & C/128 \\ C/128 & C/128 & C/128 & C/128 \\ C/128 & C/128 & C/128 & C/128 \\ C/128 & C/128 & C/128 & C/128 \end{bmatrix}$$

FIG. 7

S801: Obtain a quantized coefficient block and a second quantized parameter based on a bitstream of an image

S802: Dequantize the quantized coefficient block based on the second quantized parameter, to obtain a reconstructed transform coefficient block

S803: Inversely transform the reconstructed transform coefficient block, to obtain a reconstructed residual coefficient block

FIG. 8

Encoder 900

Determining module 901

Adjustment module 902

FIG. 9

Decoder 1000

Parsing module 1001

Reconstruction module 1002

FIG. 10

Computing device 1100

Processor 1101

Communication interface 1103

Bus 1104

Memory 1102

FIG. 11

## INTERNATIONAL SEARCH REPORT

| International application No. |
|---|
| **PCT/CN2024/074910** |

### A.  CLASSIFICATION OF SUBJECT MATTER

H04N19/124(2014.01)i;  H04N19/18(2014.01)n

According to International Patent Classification (IPC) or to both national classification and IPC

### B.  FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, ENTXTC, VEN, ENTXT, CNKI, IEEE, JVET, JCT-VC: 变换, 参数, 调整, 改, 量化, 量化系数, 阈值, 反量化, 非, 非零, 零, 全, 都, 全零, 0, QP, transform, parameter, adjust, change, quantization, quantized coefficient, threshold, inverse quantization, non-zero, zero, all

### C.  DOCUMENTS CONSIDERED TO BE RELEVANT

| Category* | Citation of document, with indication, where appropriate, of the relevant passages | Relevant to claim No. |
|---|---|---|
| A | CN 114556930 A (GOOGLE LLC) 27 May 2022 (2022-05-27)<br>entire document | 1-19 |
| A | WO 2022178686 A1 (GUANGDONG OPPO MOBILE TELECOMMUNICATIONS CORP., LTD.) 01 September 2022 (2022-09-01)<br>entire document | 1-19 |
| A | WO 2022174475 A1 (ZHEJIANG UNIVERSITY et al.) 25 August 2022 (2022-08-25)<br>entire document | 1-19 |
| A | WO 2023004590 A1 (GUANGDONG OPPO MOBILE TELECOMMUNICATIONS CORP., LTD.) 02 February 2023 (2023-02-02)<br>entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074910**

| Patent document cited in search report | | | Publication date (day/month/year) | Patent family member(s) | Publication date (day/month/year) |
|---|---|---|---|---|---|
| CN | 114556930 | A | 27 May 2022 | None | |
| WO | 2022178686 | A1 | 01 September 2022 | None | |
| WO | 2022174475 | A1 | 25 August 2022 | None | |
| WO | 2023004590 | A1 | 02 February 2023 | None | |

Form PCT/ISA/210 (patent family annex) (July 2022)

**EP 4 633 156 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310150970